# EUROPEAN PATENT APPLICATION

(11) **EP 3 531 726 A1**
(43) Date of publication of application: **28.08.2019**
(21) Application number: 19158874.8
(22) Date of filing: 22.02.2019
(51) Int. Cl.: H04W 4/16, H04M 3/54

(54) **METHOD AND APPARATUS FOR MANAGING A MANAGER/ASSISTANT CALL TRANSFER SERVICE ON MOBILE TELEPHONE COMMUNICATION NETWORKS**

(30) Priority: 22.02.2018 IT 201800002963
(71) Applicant: Welcome Italia S.p.A., 55054 Massarosa (IT)
(72) Inventor: LUISOTTI, Stefano, 55054 MASSAROSA (IT); OPPEDISANO, Francesco, 56123 Pisa (IT)
(74) Representative: Savi, Massimiliano

(57) **Abstract**

Method and apparatus for managing a manager / assistant call transfer system on mobile telephone communication networks, which may be advantageously implemented inside a mobile telephone communication network node, which is easily configured by means of the mobile communication device of the user and which allows to forward to a second user (the assistant), the calls directed to a first user (the manager) on the mobile network. Numerous additional services are further available such as the creation of white lists of calling numbers whose calls destined to the first user are transferred directly to the first user (the manager) without first being diverted to the second user (the assistant).

## Description

### FIELD OF THE INVENTION

The present invention relates to the field of telecommunications and, in particular, to a method for managing incoming telephone calls in a so-called manager / assistant mode on mobile telephone networks.

### BACKGROUND OF THE INVENTION

Telephone communication systems are increasingly developed and widespread and count a growing number of users. In particular, mobile phones and communication means are now enormously popular. Figures for 2014 estimate mobile users to be in the number of about one hundred and twenty per hundred inhabitants in developed countries and of about ninety per hundred inhabitants in developing countries.

With the development of telephone communication systems based on digital technology, auxiliary services have been established for fixed and mobile telephone network users, which allow calls to be managed in an increasingly flexible and efficient manner.

One of the aforesaid auxiliary services, the so-called call forwarding, allows diverting incoming telephone calls directed to the telephone number of one user to another user. Within the context of fixed network communication, the call forwarding service has several possible implementations; one of these implementations is related to the so-called manager / assistant call forwarding, which may be used, for example, by a company manager to allow the assistant thereof to suitably manage and filter calls incoming on the fixed telephone thereof.

With the recent development of mobile communication means, the number of calls received on mobile devices has grown enormously with respect to those received on fixed devices, but mobile switching centers (MSCs) are not equipped to implement on mobile devices the same call transfer service of the manager / assistant type which is available on fixed networks.

In fact, on conventional mobile telephone networks, it is only possible to carry out a simple unconditional call forwarding, lacking all the additional features of the call transfer services of the manager / assistant type. Once the unconditional call forwarding service is activated, the assistant will receive all the calls directed to the mobile telephone number of the manager thereof, until the manager him or herself deactivates the service. The unconditional call forwarding service on the mobile network remains active until the user manually deactivates it.

The unconditional call forwarding service has drawbacks which limit the effectiveness and usability thereof. For example, the assistant may answer the calls directed to the manager but may not transfer any conversation to the manager and may not even call the manager directly at least until the unconditional call forwarding service is deactivated.

Current call transfer services on mobile networks with the so-called fixed-mobile convergence, instead, while being able to provide the basic functionality of manager / assistant call forwarding, do not allow the flexibility, effectiveness of use and performance of the similar call forwarding services between manager and assistant available on the fixed network and generally implemented on PABX apparatuses. This mainly derives from the fact that in stationary contexts the director may have technical company personnel provide for the correct configuration of the service according to the need, while in mobility contexts the director only has the terminal thereof and may need the service at unplanned times (for example, a meeting or when entering into places not covered by mobile telephone services, etc.).

As a matter of fact, this implies that the service (of great utility in many business contexts) is practically unused precisely because of the impossibility thereof to be used autonomously (i.e., without the configuration by specialized personnel) by mobile terminals.

### BRIEF DESCRIPTION OF THE INVENTION

It is an object of the present invention, therefore, to solve the technical problem described - introducing a new call transfer service between manager and assistant on a mobile network - overcoming the drawbacks of the available solutions and offering a greater service configuration simplicity for the users, with respect to the systems currently in use.

The method according to the present invention, which may be advantageously implemented, for example, inside a mobile telephone communication network node, allows to forward to a second user (the assistant) all the calls directed to a first user (the manager) on the mobile network. The second user may answer the "intercepted" calls either directly from the mobile telephone thereof registered on the mobile network, or from a fixed network terminal, and may also transfer the ongoing call to the first user or a third user, if that is deemed suitable. The second user may continue using the mobile device normally without any functionality (sending and receiving calls, sending and receiving SMSs, Internet browsing) being prohibited. In addition to this, the method according to the present invention allows to establish a white list of calling numbers whose calls destined to the first user are transferred directly to the first user (the manager) without first being diverted to the second user (the assistant).

The first user has the possibility to set the service and to subsequently activate it or deactivate it. The setting of the service includes the pre-selection of the assistant or of the assistants the fixed or mobile telephone numbers thereof are registered in the system. Once the first setting is ready, the first user may activate - and deactivate - the service in complete autonomy, with a simple procedure to be carried out on the mobile or fixed communication device thereof, and may freely choose both the second user who will take on the assistant function, as well as the communication device, fixed or mobile, associated with the second user.

Furthermore, the call transfer service according to the present invention may advantageously be activated also by means of data connections of any type (e.g., WiFi) and, therefore, also in case the mobile network is not available. This aspect makes the system according to the present description advantageous with respect to all the systems in which the configuration communication takes place on messaging based on a mobile network such as, for example, the Unstructured Supplementary Service Data systems (USSD).

In a preferred embodiment of the method according to the present invention, following the activation by the first user of the call transfer service according to the present invention, a notification is automatically sent (for example by means of an SMS message, a push notification, a whatsapp message, a voice call requesting to enter a confirmation code, etc.) to the second user, to inform him or her that the first user has activated the call transfer service towards the number of the second user.

Furthermore, with the method according to the present invention, the second user (assistant) will be able to transfer the task thereof to a different second user so as to guarantee the continuity of the service to the first user even in cases in which the second user encounters a drawback or, simply, reaches the end of the work shift thereof.

In another preferred embodiment of the method according to the present invention, the first user may configure in complete autonomy a so-called VIP list or white list, i.e., a list of telephone numbers whose calls addressed to the first user may skip the diversion towards the second user and be routed directly to the first user.

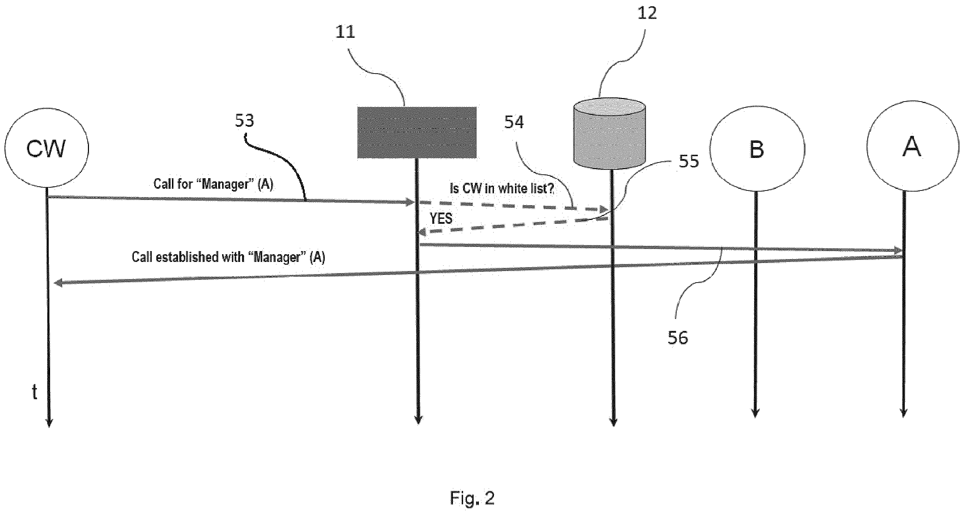

In case a user CW, present in the aforesaid white list calls the user A, the operation of the method according to the present invention is shown in the accompanying Figure 2.

In a further preferred embodiment of the method according to the present invention, a plurality of second users may be present among which the calls directed to the first user are sorted alternately and cyclically or in other modes programmable by the first user.

Similarly, in a further preferred embodiment of the method according to the present invention, a plurality of first users (managers) and a single second user (assistant) may be present. In this case, the system will be able to automatically establish to which first user the call was destined and to forward it, if the second user decides so, to said first user correctly.

Further objects, features, embodiments and advantages of the present invention will become more apparent from the following detailed description, given by way of explanation and not by way of limitation and shown in the accompanying Figures in which:

### BRIEF DESCRIPTION OF THE DRAWINGS

Figure 1 shows a diagrammatic description of the case of an example of a standard unconditional call forwarding between a calling user C and a user B recipient of the call forwarding;
Figure 2 shows a diagrammatic description of the case of an example of a call made towards a user A by a user CW the number of which is included in the white list of the service according to the present invention;
Figure 3 shows a diagrammatic description of the case of an example of application of the method according to the present invention in which the call of a user C directed to the first user A (manager) is forwarded to the second user B (assistant) and subsequently accepted by the first user A;

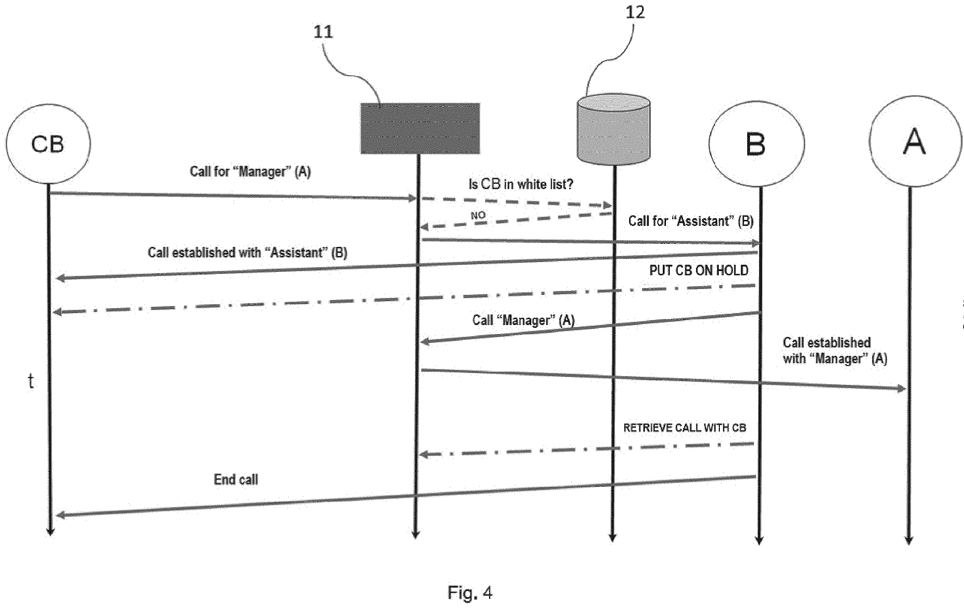

Figure 4 shows a diagrammatic description of the case of an example of application of the method according to the present invention in which the call of a user C directed to the first user A (manager) is forwarded to the second user B (assistant) and subsequently rejected by the first user A;
Figure 5 shows a diagrammatic description of a first example of activation, by the first user A, of the service according to the method of the present invention;
Figure 6 shows a diagrammatic description of a second example of activation, by the first user A, of the service according to the method of the present invention;
Figure 7 shows a diagrammatic description of an example of the setting, by the first user A, of the telephone number of the second user B inside the service according to the method of the invention;
Figure 8 shows a diagrammatic description of an example of the addition or deletion, by the first user A, of a telephone number to or from the white list of the service according to the method of the invention;
Figure 9 shows a diagrammatic description of a first example of the activation procedure, by the first user A, of the telephone number of the second user B inside the service according to the method of the invention. Once activated, an acceptance request is sent to the second user B and, once the consent from the second user B is received, the first user A is notified that the second user B has accepted the service;
Figure 10 shows a diagrammatic description of a second example of activation, by the first user A, of the telephone number of the second user B inside the service according to the method of the invention, in which a notification is sent to the second user B and, once the service is activated, the first user A is notified that the second user B has accepted the service;
Figure 11 shows a diagrammatic description of the method by which a second user B (assistant) may, due to the end of the shift or another contingent motivation, transfer the task of processing the calls of the first user A (manager) to another second user B (assistant) present in the group of available assistants listed;
Figure 12 shows a diagrammatic description of the method by which the system according to the invention notifies the first user A (manager) of the deactivation of the service in the event that no second user B (assistant) in the group of available assistants listed is able to accept the service and
Figure 13 shows a diagrammatic description of the system according to the present invention comprising at least a first user A (manager), at least a second user B (assistant) associated with a service database by means of a data network and by means of a telephone network.

### DETAILED DESCRIPTION OF THE INVENTION

The method according to the present description allows a telephone call to be transferred between a first user (manager), to which the call is destined, and a second user (assistant), on a mobile network.

The method therefore allows, for example, to filter the calls directed to a company manager by first sending them to an assistant who may decide, possibly after having consulted the manager, whether to let the call pass or not.

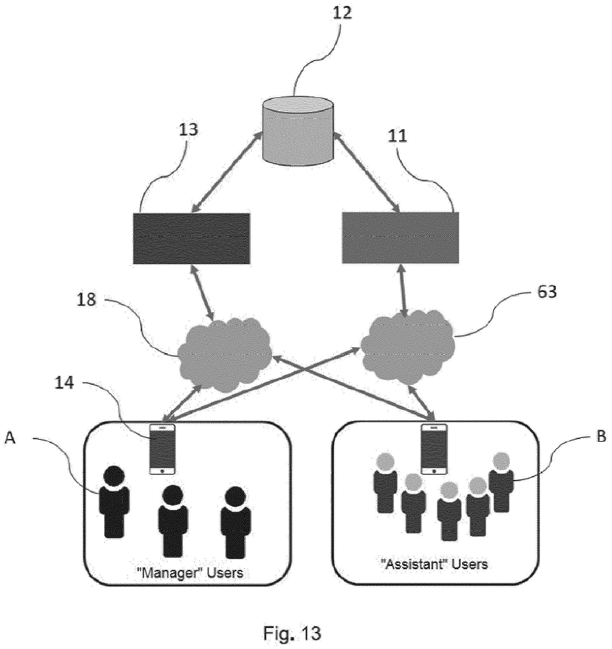

The accompanying Figure 13 shows a synthetic diagram of all the actors involved in the development of the method according to the proposed invention. At least one first user A (manager) provided with a portable communication device 14, and at least one second user B (assistant) are shown, both associated with suitable storage means, for example realized by means of a service database 12, by means of a data network 18, such as, for example, the Internet and by means of a telephone network 63.

The other accompanying Figures and the following description relate to the implementation of the method according to the invention on a telephone switching apparatus used by a mobile operator (Telephone Switch - indicated below as TS 11).

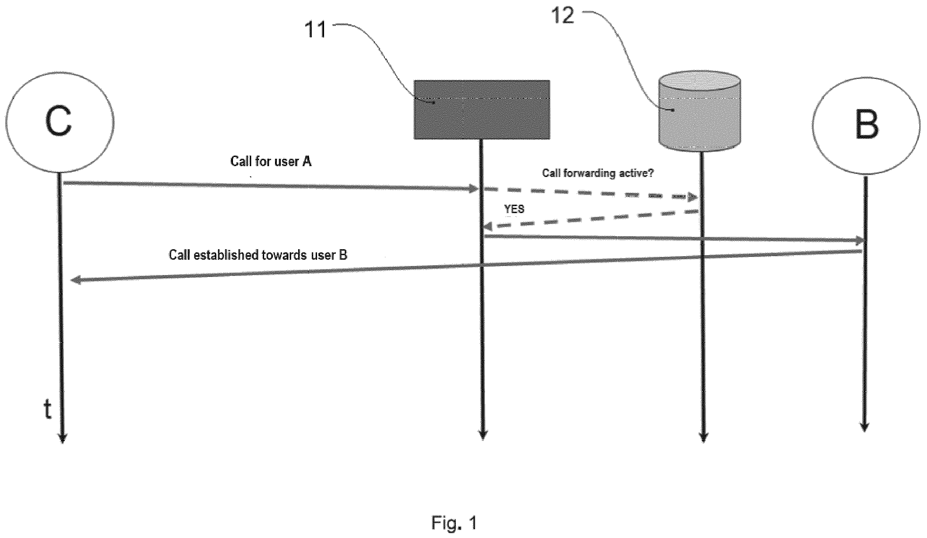

In the accompanying Figure 1 the case is described of a background art-standard unconditional call forwarding between a user C - which makes a call attempt to a first user A - and a second user B, from the perspective of the telephone switch TS 11 of the mobile operator used as an example. The user C makes a call to the user A, the call is received by the telephone switch TS 11. The telephone switch TS 11 checks for the presence of a registered unconditional forwarding service on a service database 12 and, in the affirmative case, routes the call of the user C to the user B, who will answer instead of the user A.

The unconditional call forwarding services of the background art, as explained above, have significant limitations since the user B may answer the calls addressed to the user A, but he or she cannot transfer to the user A any conversation and may not even call the user A until the service itself is deactivated, since each direct call to the user A is forwarded to the number of the user B. In other words, it is as if the user A had temporarily deactivated the telephone thereof.

The manager / assistant call forwarding service available on fixed telephone networks - and rarely on mobile telephone networks - solves some of the above drawbacks, but is scarcely used due to the difficulties it presents, mainly in the activation procedures. The information and data contained in the service database 12 are managed by technical personnel (for example, the IT managers of the company) who operate at the request of the users who want to use the service, and therefore the setting and the enabling of the service itself are cumbersome and not very flexible.

On the contrary, the method of the invention does not require the presence of IT management personnel but only the persons directly interested in the service. More precisely, the manager users are those who are put in the position to interact with a service database so as to manage the group of user assistants thereof in a simple and effective manner.

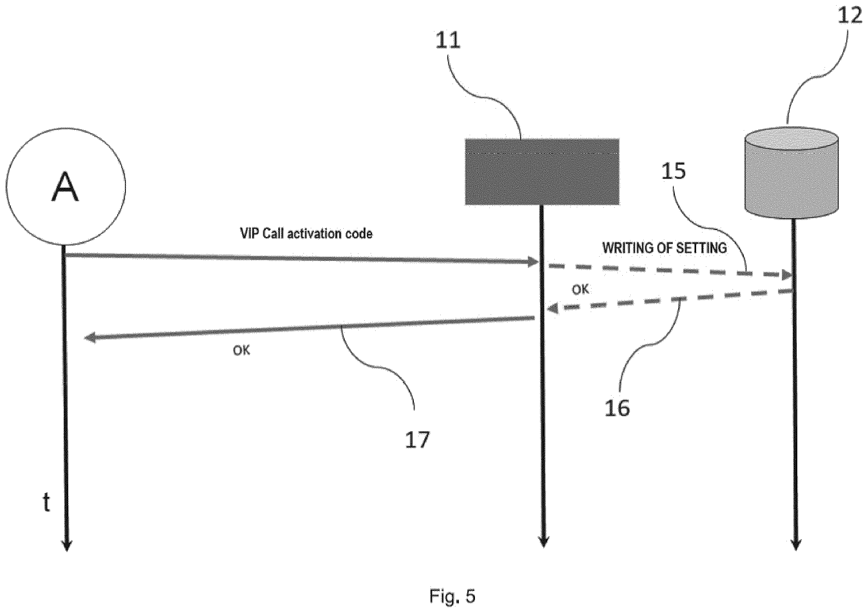

Figure 5, accompanying the present application, shows a diagrammatic description of the service activation or deactivation procedure following the method according to the present invention carried out by the first user A interacting with the telephone switch TS 11. The user A dials on the mobile device thereof a suitable code, the telephone switch TS 11 reacts to the command received by inserting a suitable indication 15 into the service database 12 and, as soon as it receives an acknowledgment 16 from the same service database 12, sends 17 to the user A the confirmation of the service activation.

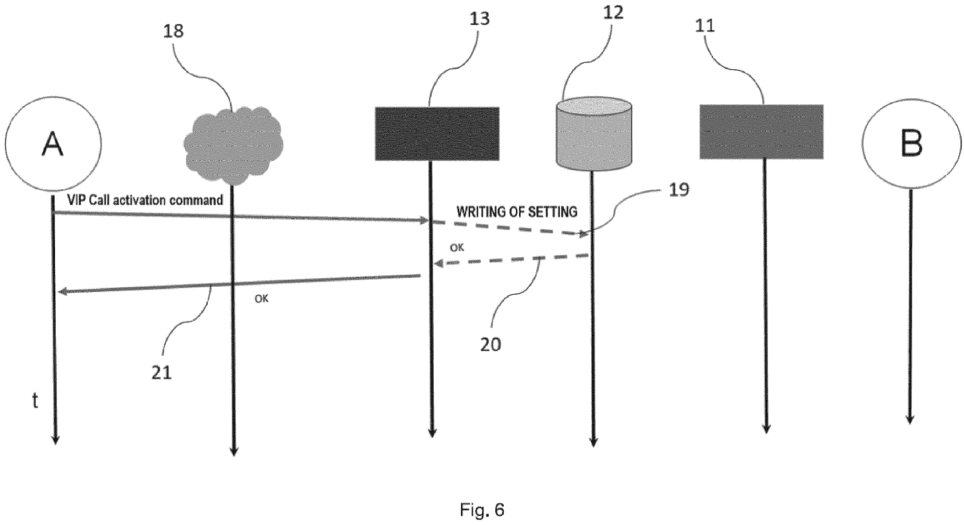

In another preferred embodiment of the present invention and with reference to the accompanying Figure 6, the user A may perform the call transfer service activation or deactivation operation by means of a suitable application on the telephone device thereof (e.g., an app for smartphones) which requests, by electronic means, a suitable Application Programming Interface (API), and connects remotely, by means of the Internet 18 or other similar data networks, to the service database 12 so as to enter the indication of the activation of the service.

Transactions between the user A (for example by means of a suitable smartphone app) and the service database 12 do not occur directly but are mediated by a Management System 13 which function is to expose said API to said service database 12. The presence of said Management System 13 is generally required in telecommunications systems for various reasons, including security and the possibility of modifying the service database without updating the interfaces that use such database.

An example of Management System 13 according to the present invention comprises the following component parts:
A system for accepting "requests for the execution of remote procedures" by electronic means, realized, for example, by a web server responding to requests for API execution on a RESTful protocol;
A "business logic", realized, for example, by means of an application server based on Java or other similar languages, which translates remote requests into suitable lists of instructions to be performed on the service database;
A system for the connection to the service database, created, for example, by a connector of the Open Database Connectivity ODBC (ODC) type, or another similar technology, able to execute said list of instructions on said service database.

Also in this case, the user A dials on the mobile device thereof a suitable code, the Management System 13 reacts to the command received by inserting a suitable indication 19 into the service database 12 and, as soon as it receives 20 an acknowledgment from the same service database 12, sends 21 to the user A the confirmation of the service activation.

The aforesaid setting modes of the call transfer service according to the present invention, by means of the use of a suitable application on the telephone device of the user, are able to cover both the cases in which the mobile device of user A has voice connectivity but not data connectivity, as well as the cases in which the same mobile device has data connectivity but not voice connectivity.

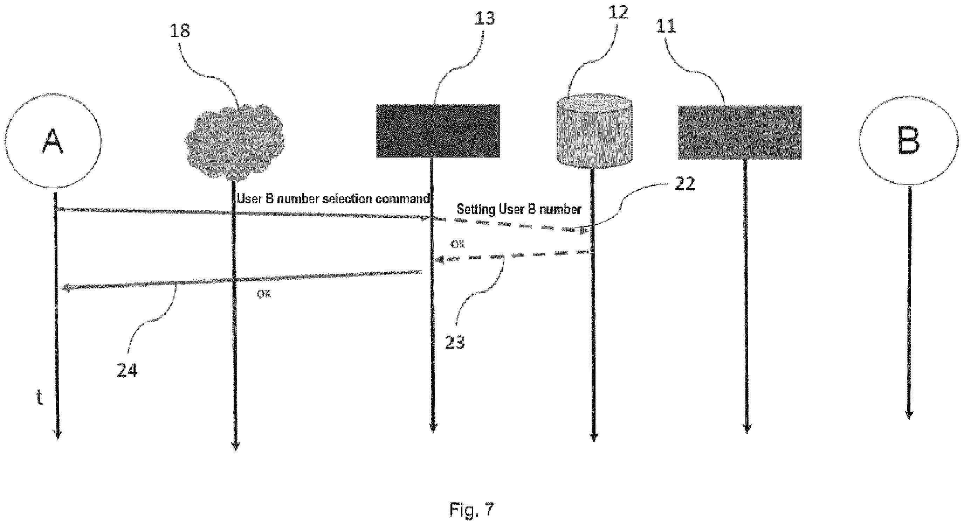

With reference to the accompanying Figure 7, by means of the aforesaid application on the telephone device of the user A, it is further possible to select and set the number (or the numbers, in case of multiple users B) of the second user B (assistant) on which the calls directed to the user A, provided with a portable communication device 14, must be diverted. Also in this case, the user A may interact with said application which requests, by electronic means, a suitable API which inserts the setting of the number or of the numbers of the users B into the service database 12.

Also in this case, the user A dials on the mobile device thereof a suitable code and an identifier - or more identifiers - of the second user B, the Management System 13 reacts to the command received by inserting a suitable indication 22 into the service database 12 and, as soon as it receives 23 an acknowledgment from the same service database 12, sends 24 to the user A the confirmation of the service activation.

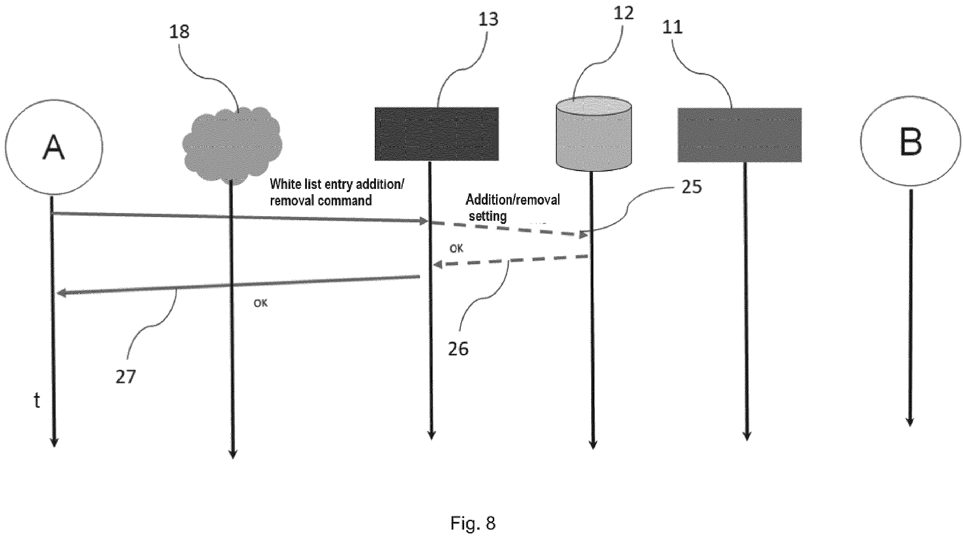

A similar operation is performed in case of deletion of the numbers of the users B from the service database 12 and in case of insertion and/or deletion of numbers from the white list as shown in Figure 8 attached. Also in this case, the user A dials on the mobile device thereof a suitable code and an identifier - or more identifiers - of users to be added or removed from the white list, the Management System 13 reacts to the command received by inserting a suitable indication 25 into the service database 12 and, as soon as it receives 26 an acknowledgment from the same service database 12, it sends 27 to the user A the confirmation of the performed operation.

As mentioned above, in case a user CW, present in the aforesaid white list calls the user A, the operation of the method according to the present invention is shown in the accompanying Figure 2. The telephone switch TS 11 receives 53 the call from a user CW directed to the first user A. Subsequently, the telephone switch TS 11 controls 54 the presence of the identifier of the calling user CW in the service database 12 and, having received confirmation of the presence of CW into the service database 12, it routes 56 the call from the user CW to the first user A.

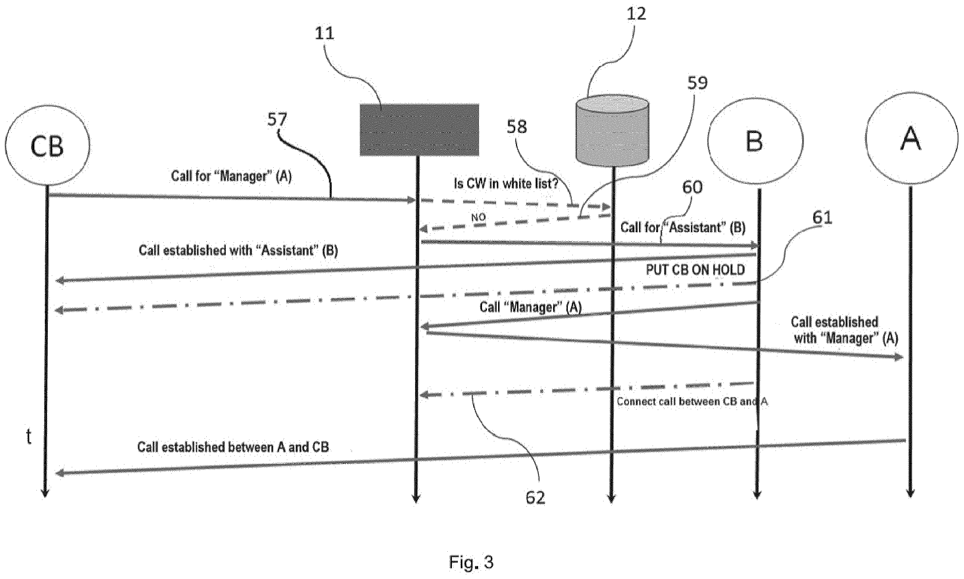

In the case shown in the accompanying Figure 3, in which a user CB, not previously inserted in the aforesaid white list, calls the user A, the telephone switch TS 11 receives 57 the call from a user CB directed to the first user A. Subsequently, the telephone switch TS 11 controls 58 the presence of the identifier of the calling user CB in the service database 12 and, once received 59 information on the lack of presence of CB in the service database 12, passes 60 the call of CB to the second user B. The second user B may, at this point, deeming it appropriate, pause 61 the ongoing call with the user CB and transfer it 62 to the first user A.

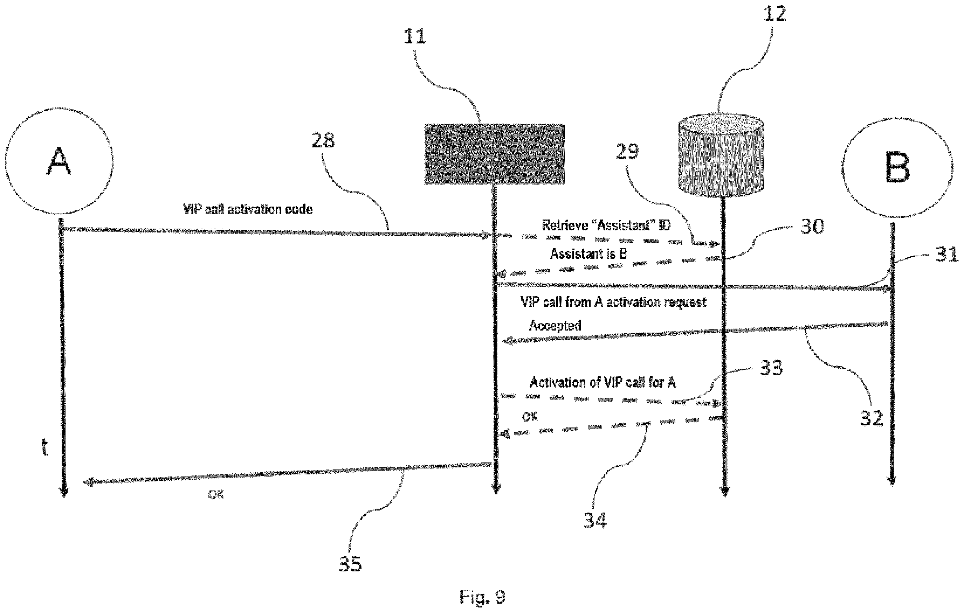

In another preferred embodiment of the method according to the present invention, the second user B has the possibility of sending a confirmation of the acceptance of the service. With reference to the accompanying Figure 9, the first user A dials on the portable communication device 14 thereof, a suitable code or a sequence of codes for the activation of the service according to the present invention; the telephone switch TS 11 receives the command 28 and reacts to the command received by searching 29, in the service database 12, the number of the second user B which was previously selected and, once received it 30, sends 31 to user B a request for availability and for confirmation of acceptance of the activation. The user B, at this point, dials a suitable code on the mobile device thereof to send 32 the acceptance of the taking over of the service to the telephone switch TS 11 which updates 33 the service database 12 and, once received an acknowledgment 34 from the same service database 12, sends 35 to user A the confirmation of the activation of the service and the availability of the user B.

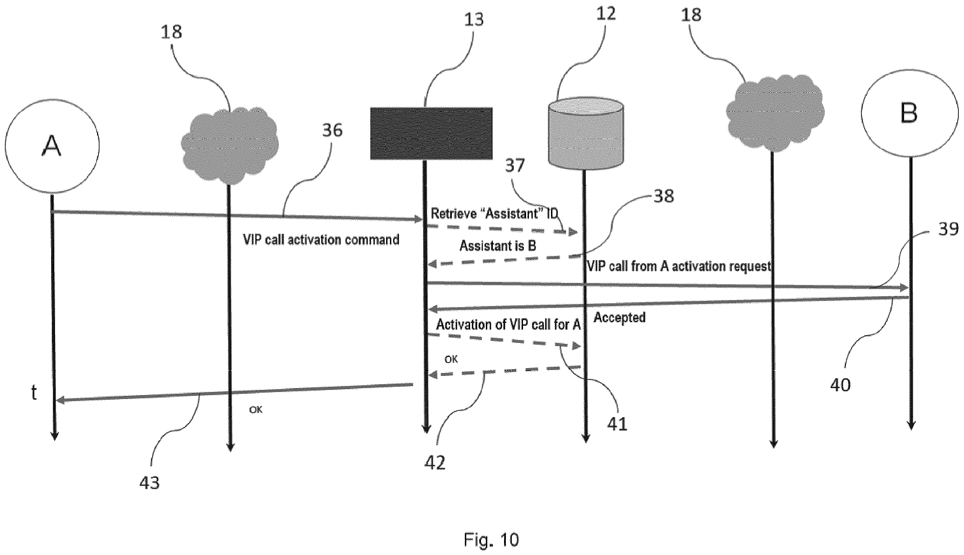

With reference to Figure 10, also for this operation, the user A may interact, on the portable communication device 14 thereof, with said application which requests, by electronic means, a suitable API which, by means of the connection to the Internet 18 or to another similar network, sends 36 a command to the management system 13 for the activation of the service according to the present invention. Said management system 13 receives the command and reacts to the command received by searching 37, in the service database 12, the number of the second user B which was previously selected and, as soon as it receives it 38, sends 39 to user B a request for availability and for confirmation of acceptance of the activation. The user B, at this point, in turn dials a suitable code on the mobile device thereof to send 40 the acceptance of the taking over of the service to the management system 13 which updates 41 the service database 12 and, once received an acknowledgment 42 from the same service database 12, sends 43 to user A the confirmation of the activation of the service and the availability of the user B.

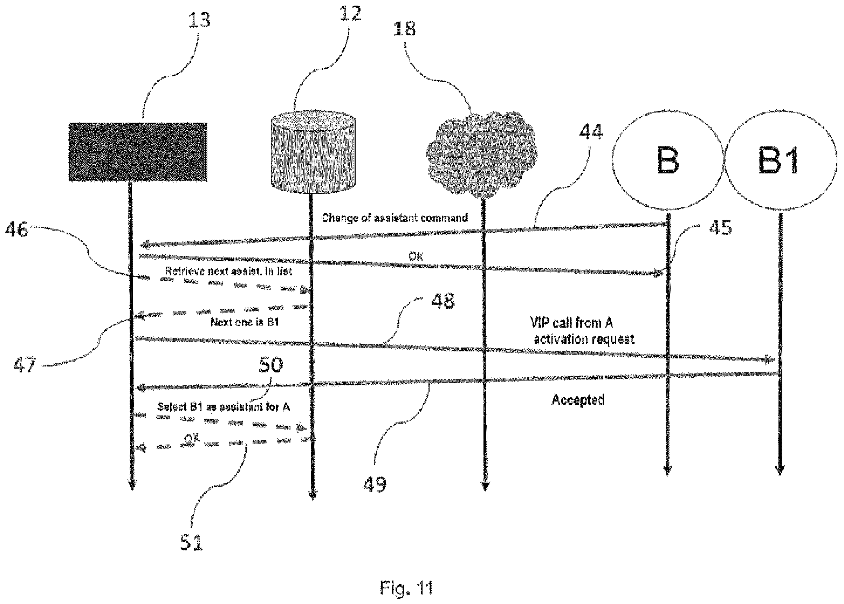

In the case shown in the accompanying Figure 11, in which the initially selected user B is not, or is no longer, available, the management system 13, following a request received 44 in such sense by the user B in office, will carry out the operation described above for each of the other users B on the list. The management system 13, therefore, will send 45 a confirmation to the outgoing user B, and will search 46, in the service database 12, the number of the second user B1 in the list and, once received 47, it will send 48 to the user B1 a request for availability and for confirmation of acceptance of the activation. The user B1, at this point, in turn dials a suitable code on the mobile device thereof to send 49 the acceptance of the taking over of the service to the management system 13 which updates 50 the service database 12 and, once received an acknowledgment 51 from the same service database 12, sends to user A the confirmation of the activation of the service and the availability of the user B1.

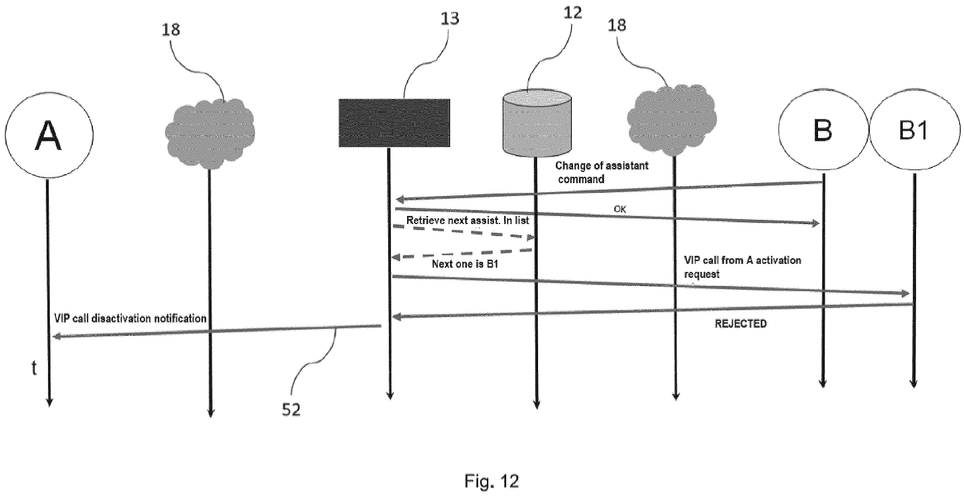

Finally, Figure 12 describes the case in which none of the assistant users are in a condition to accept the service. In this case the telephone switch TS 11 or the management system 13 will deactivate the service and notify 52 the user A of the automatic deactivation of the service itself.

## Claims

1. Method for managing telephone call transfers on a mobile telephone network node (63), between at least one first user (A), who is the recipient of the call and provided with a portable communication device (14) associated with a telephone network (63) and with a data network, and at least one second user (B), said mobile telephone network node (63) comprising a telephone switch apparatus, TS, (11) associated with storage means, associated in turn with a management system (13) connected to said data network, **characterized in that** it comprises the following steps:
a) the management system (13) receives identifying settings of at least one second user (B) to which the telephone calls directed to the first user (A) must be diverted from the first user (A);
b) the management system (13) stores said identifying settings on said storage means;
c) the telephone switch apparatus, TS, (11) receives a call directed to a first user (A);
d) the telephone switch apparatus, TS, (11) checks for the presence of call transfer settings between said first user (A) and said at least one second user (B) on said storage means and, in the affirmative case, routes the call directed to said first user (A) to said at least one second user (B).

2. Method according to claim 1, **characterized in that** it comprises the further steps:
e) the management system (13) receives activation settings of the telephone call transfer between said at least one first user (A) and said at least one second user (B) from the first user (A);
f) the management system (13) stores said activation settings on said storage means.

3. Method according to one or more of the claims 1-2, **characterized in that** it comprises the further steps:
g) the management system (13) receives deactivation settings of the telephone call transfer between said at least one first user (A) and said at least one second user (B) from the first user (A);
h) the management system (13) stores said deactivation settings on said storage means.

4. Method according to claim 1, **characterized in that** it comprises the further steps:
i) the telephone switch apparatus, TS, (11) receives activation settings of the telephone call transfer between said at least one first user (A) and said at least one second user (B) from the first user (A);
j) the telephone switch apparatus, TS, (11) stores said activation settings on said storage means.

5. Method according to one or more of the claims 1 and 4, **characterized in that** it comprises the further steps:
k) the telephone switch apparatus, TS, (11) receives deactivation settings of the telephone call transfer between said at least one first user (A) and said at least one second user (B) from the first user (A);
I) the telephone switch apparatus, TS, (11) stores said deactivation settings on said storage means.

6. Method according to one or more of the claims 1-5, **characterized in that** it comprises the further steps:
m) the management system (13) receives identifying settings of at least one third user (CW) to which the telephone calls directed to the first user (A) must not be diverted from the first user (A);
n) the management system (13) stores said identifying settings on said storage means.

7. Method according to claim 6, **characterized in that** it comprises the further step, performed between the steps c) and d):
c2) the telephone switch apparatus, TS, (11), checks for the presence of identifying settings of at least one third user (CW) on said storage means and, in the affirmative case, routes the call to said first user (A).

8. Method according to one or more of the claims 1-7, **characterized in that**:
the management system (13) receives identifying settings of a plurality of second users (B) to which the telephone calls directed to the first user (A) may be diverted from the first user (A).

9. Method according to claim 8, **characterized in that** it comprises the further steps:
o) the management system (13) receives the selection of the identifier for a second user (B) of said plurality of second users (B) from the first user (A);
p) the management system (13) stores said identifier of the selected second user (B) on said storage means.

10. Method according to one or more of the claims 1 and 9, **characterized in that** it comprises the further steps:
q) the management system (13) sends a selection acceptance request to the second user (B);
r) the second user (B) sends the acceptance or rejection of the selection to the management system (13);
s) if the second user (B) sends the refusal of the selection to the management system (13), the management system (13) selects a new second user (B) from said plurality of second users (B), updates said storage means and restarts from step q) above;
t) the second user (B) sends the acceptance of the selection to the management system (13), the management system (13) stores said identifier of the selected second user (B), on said storage means.

11. Method according to claim 8, **characterized in that** it comprises the further steps:
u) the telephone switch apparatus, TS, (11) receives the selection of the identifier of a second user (B) of said plurality of second users (B) from the first user (A);
v) the telephone switch apparatus, TS, (11) stores said identifier of the selected second user (B) on said storage means.

12. Method according to one or more of the claims 1 to 8 and 11, **characterized in that** it comprises the further steps:
w)the telephone switch apparatus, TS, (11) sends a selection acceptance request to the second user (B);
x) the second user (B) sends the acceptance or rejection of the selection to the telephone switch apparatus, TS, (11);
y) if the second user (B) sends the refusal of the selection to the telephone switch apparatus, TS, (11), the management system (13) selects a new second user (B) from said plurality of second users (B), updates said storage means and restarts from step w) above;
z) if the second user (B) sends the acceptance of the selection to the telephone switch apparatus, TS, (11), the telephone switch apparatus, TS, (11) stores said identifier of the selected second user (B), on said storage means.

13. Method according to one or more of the claims 1 and 12, **characterized in that** it comprises the further steps:
aa) the management system (13) receives information of the interruption of the availability of said second user (B) from the second user (B);
bb) the management system (13) selects a new second user (B) from said plurality of second users (B) and updates said storage means.

14. Apparatus for managing a telephone call transfer between at least one first user (A), who is the recipient of the call and provided with a portable communication device (14) associated with a telephone network (63) and with a data network, and at least one second user (B), said apparatus comprising a telephone switch apparatus, TS, (11) belonging to a telephone network node (63) and associated with storage means; a management system (13) connected to said data network and associated with said storage means, **characterized in that**:
said management system (13) is able to
receive from the first user (A), by means of said portable communication device (14) and said data network, identifying settings of at least one second user (B) to which the telephone calls directed to the first user (A) must be diverted;
receive from the first user (A), by means of said portable communication device (14) and said data network, activation settings of the telephone call transfer between said at least one first user (A) and said at least one second user (B);
store said identifying settings and said activation settings on said storage means;
said telephone switch apparatus, TS, (11) is able to receive a call directed to said first user (A);
check on said storage means for the presence of call transfer settings between said first user (A) and said at least one second user (B) and, in the affirmative case, routes the call directed to said first user (A) to said at least one second user (B).

15. Apparatus according to claim 14, **characterized in that** said telephone switch apparatus, TS, (11) is further able to
receive from the first user (A), by means of said portable communication device (14) and said telephone network (63), identifying settings of at least one second user (B) to which the telephone calls directed to the first user (A) must be diverted;
receive from the first user (A), by means of said portable communication device (14) and said telephone network (63), activation settings of the telephone call transfer between said at least one first user (A) and said at least one second user (B);
store said identifying settings and said activation settings on said storage means;

16. Apparatus according to claim 14, **characterized in that** said telephone switch apparatus, TS, (11) is further able to check on said storage means for the presence of identifying settings of at least one third user (CW) and, in the affirmative case, routes the call to said first user (A).

17. Apparatus according to one or more of the claims 14 to 15, **characterized in that** said management system (13) is further able to
receive from the first user (A) identifying settings of a plurality of second users (B) to which the telephone calls directed to the first user (A) may be diverted; receive from the first user (A) the selection of the identifier for a second user (B) of said plurality of second users (B).

18. Apparatus according to claim 17, **characterized in that** said telephone switch apparatus, TS, (11) is further able to
receive from the first user (A) identifying settings of a plurality of second users (B) to which the telephone calls directed to the first user (A) may be diverted; receive from the first user (A) the selection of the identifier for a second user (B) of said plurality of second users (B).
